# EUROPEAN PATENT SPECIFICATION

(11) **EP 3 460 404 B1**
(45) Date of publication and mention of the grant of the patent: **02.07.2025**
(21) Application number: 17798770.8
(22) Date of filing: 19.05.2017
(51) Int. Cl.: G05D 1/00

(54) **AUTONOMOUS MOBILE ROBOT, MAP BUILDING METHOD, AND MAP CALLING METHOD FOR COMBINED ROBOT**
AUTONOMER MOBILER ROBOTER, KARTENERSTELLUNGSVERFAHREN UND KARTENANRUFSVERFAHREN FÜR KOMBINIERTEN ROBOTER
ROBOT MOBILE AUTONOME, PROCÉDÉ DE CONSTRUCTION DE CARTE, ET PROCÉDÉ D'APPEL DE CARTE POUR ROBOT COMBINÉ

(30) Priority: 19.05.2016 CN 201610334640
(43) Date of publication of application: 27.03.2019
(73) Proprietor: Ecovacs Robotics Co., Ltd., Suzhou, Jiangsu 215168 (CN)
(72) Inventor: TANG, Jinju, Suzhou Jiangsu 215168 (CN)
(74) Representative: Renaudo, Adrien Hanouar
(86) International application number: PCT/CN2017/085017
(87) International publication number: WO 2017/198207

(56) References cited:
- WO-A1-2010/114235
- CN-A- 101 430 207
- CN-A- 102 359 784
- CN-A- 105 091 884
- CN-U- 202 005 711
- JP-A- 2014 157 478
- US-A1- 2002 153 184
- US-A1- 2007 100 498
- US-A1- 2016 027 207
- KANEHIRO F ET AL: "Locomotion planning of humanoid robots to pass through narrow spaces", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, vol. 1, 26 April 2004 (2004-04-26), pages 604 - 609, XP010768341, ISBN: 978-0-7803-8232-9, DOI: 10.1109/ROBOT.2004.1307215

## Description

### FIELD

The present disclosure relates to a self-moving robot, a map building method, and a map invoking method for a combined robot.

### BACKGROUND

A self-moving robot may be used for its convenient control and flexible action. For some self-moving robot, such as an integrated combined robot, the height may be limited to a certain degree. In the walking process of the self-moving robot, if the height of an obstacle is less than the height of the body of the self-moving robot, then the self-movement walk of the robot is hindered and the self-moving robot cannot pass through the obstacle smoothly.

The subject matter claimed herein is not limited to embodiments that solve any disadvantages or that operate only in environments such as those described above. Rather, this background is only provided to illustrate one example technology area where some embodiments described herein may be practiced.

Prior document D1 (WO 2010/114235 A1) discloses a mobile robot with single camera and a method for recognizing 3d surroundings of the same, where images of the surroundings are captured, and a preset number of particles with respect to feature points of a first image are projected to a second image based on matching information of feature points extracted from the two images sequentially captured, thereby extracting 3D information of the surroundings (see ABSTRACT of D1). Prior document D2 (US 2007/100498 A1) discloses a mobile robot, specifically discloses that a system has a path-setting unit for setting the path of a mobile apparatus according to the inputted path, a measuring unit for measuring an environment in which the mobile apparatus exists, an extracting unit for extracting an object existence region in the environment according to the values measured by the measuring unit, a judging unit that judges the validity of the path according to the path set by the path setting unit and to the object existence region extracted by the extracting unit, a position determining unit that determines a target position to which the mobile apparatus is to move by selecting it from the portions of the path judged as valid, and a movement controller for controlling the mobile apparatus to move to the target position (see ABSTRACT of D2). Prior document D3 (WO 2002/153184 A1) discloses a robot cleaner, a robot cleaning system and a method for controlling same, the robot cleaner cleaning by wirelessly communicating with an external apparatus having a driving unit for driving a plurality of wheels; an upper camera disposed on a main body for photographing an upper image perpendicular to a direction of driving the robot cleaner; and a controller for controlling the driving unit to allow the robot cleaner to drive with a cleaning area according to a predetermined driving pattern, and compensating the driving path by analyzing the image photographed by the upper camera (see ABSTRACT of D3). Prior document D8 (KANEHIRO F ET AL: "Locomotion planning of humanoid robots to pass through narrow spaces") discloses generating a 3D local map from visual information and planning the appropriate locomotion based on the map from biped walking with the variable height and the width and from crawling (see ABSTRACT of D8). Prior art document D9 (CN 202005711 U) generally discloses a robot capable of being automatically separated, and specifically discloses that the robot comprises a module part and a robot body, wherein the robot body comprises a driving unit, a walking mechanism, a control unit and an energy supply unit; the module part is provided with a first working module, a control mechanism and an automatic combination actuating mechanism; the control mechanism control the automatic combination actuating mechanism to combine the module part on the robot body according to the instructions of the control unit; and the first working module is supplied with power to work by the energy supply unit. According to the actual working requirements, the module part is separated or combined with the robot body, therefore, the energy waste is avoided, and the purpose of saving energy and electricity is achieved (see ABSTRACT of D9). Prior art document D10 (US 2016/027207 A1) generally discloses a method for cleaning or processing a room by means of an autonomously mobile device, and specifically discloses that in order the relieve the user of the task of finding the exact subarea to which the device must travel, or avoid, on a map of the room, the user in order to select a subarea takes a photograph of the subarea and transmits it to a processing unit (see ABSTRACT of D10).

### SUMMARY

The invention is set out in the appended set of claims.

In the present disclosure, a self-moving robot, a map building method, and a map invoking method for a combined robot is provided in view of the defects of other applications. For example, through distance sensors disposed on the self-moving robot, based on a generated two-dimensional map, spatial height information may be overlaid and three-dimensional map information may be generated. Additionally or alternatively, in a combined state, the robot invokes and plans a walking path in a working region based on a three-dimensional map, thereby ensuring smooth, safe and efficient operation of the combined robot in a complex environment.

In these or other embodiments of the present disclosure, a self-moving robot includes, for example, a robot body and a control center disposed on the body, wherein the robot body includes a first distance sensor disposed in a horizontal direction and a second distance sensor disposed in a vertical direction. In these or other embodiments, the first distance sensor collects two-dimensional map information of a working surface in which the self-moving robot is located. Additionally or alternatively, the second distance sensor collects spatial height information above the working surface in which the self-moving robot is located; and while obtaining the two-dimensional map information of the working surface, the control center combines the spatial height information with the two-dimensional map information to obtain three-dimensional map information of a working region.

In these or other embodiments, the first distance sensor and the second distance sensor may include an ultrasonic sensor, an infrared sensor and/or a visual sensor. Additionally or alternatively, the spatial height information above the working surface is a distance between the working surface and a lower surface of an encountered obstacle.

The present disclosure also provides a map building method for the above self-moving robot, including the following example steps:
step 100: generating two-dimensional map information of a working surface; and
step 200: collecting spatial height information above the working surface in real time and overlaying the spatial height information to the two-dimensional map information of the working surface to obtain and save three-dimensional map information of a working region.

In these or other embodiments, the two-dimensional map information in the step 100 is obtained by the self-moving robot scanning the working surface during a traversing walk. Additionally or alternatively, the spatial height information above the working surface in the step 200 is a distance from the working surface to a lower surface of an encountered obstacle. A specific process of overlaying the spatial height information to the pre-generated two-dimensional map information may include:
step 201: the self-moving robot walking in the working region, recording a coordinate of a discrete point N1 as (xl, yl), simultaneously detecting a spatial height above the point N1 as h1, and then recording a three-dimensional coordinate of a highest point M1 of the space above the discrete point N1 as (x1, y1, h1);
step 202: the self-moving robot continuing to walk, and continuing to record three-dimensional coordinates of highest points M2 to Mn of the spaces above discrete points N2 to Nn until the self-moving robot completes a traversing walk in the working region; and
step 203: fitting spatial information from a surface fitted by the discrete points N1 to Nn to a surface fitted by the points M1 to Mn into three-dimensional map information and saving.

A three-dimensional map of the working region is built according to the three-dimensional map information saved in the step 203.

The present invention also provides a map invoking method conducted by a combined robot. The combined robot includes a self-moving robot combined to a functional module, where, in an uncombined mode, the self-moving robot works without the functional module, and in the uncombined mode, the self-moving robot generates two-dimensional map information of a working surface by scanning the working surface during a traversing walk and three-dimensional map information by collecting spatial height information above the working surface and by overlaying said spatial height information to the two-dimensional map information. The method comprises: invoking three-dimensional map information; calculating a plane map with a height L from the ground according to a body height of the combined robot and three-dimensional map information; planning a walking path according to the plane map; and conducting a walking operation along the walking path. The combined robot further includes the functional module combined and connected with the self-moving robot. The self-moving robot is provided with a storage unit and the two-dimensional map information and the three-dimensional map information of the working region configured to be stored in the storage unit.

The combined robot includes an uncombined mode and a combined mode. When the self-moving robot works individually or alone, the combined robot is in the uncombined mode; and when the self-moving robot is combined and connected with the functional module, the combined robot is in the combined mode.

In the uncombined mode, the self-moving robot invokes the two-dimensional map information and conducts a walking operation on a two-dimensional working surface. In the combined mode, the combined robot invokes the three-dimensional map information, calculates a plane map with a height L from the ground according to a body height of the combined robot and three-dimensional map information, planes a walking path according to the plane map, and conducts a walking operation along the walking path; wherein the combined robot including the self-moving robot and the functional module combined and connected on top of the self-moving robot; and a storage unit configured to store two-dimensional map information and the three-dimensional map information of a working region. For example, in the combined mode, the combined robot plans a walking path according to the three-dimensional map information and calculates a walkable working region.

Additionally or alternatively, the combined robot calculates: map information of a first plane P1 according to body height L and the three-dimensional map information. In these or other embodiments, a height difference between the first plane P1 and the working surface is the body height L of the combined robot. Additionally or alternatively, the combined robot plans the walking path according to the two-dimensional map information of the first plane P1.

Thus, in some embodiments, the present disclosure provides a self-moving robot, a map building method, and a map invoking method for a combined robot. In the present disclosure, through the distance sensors disposed on the self-moving robot, based on the generated two-dimensional map, the spatial height information is overlaid and the three-dimensional map information is generated; and in the combined state, the robot invokes and plans the walking path in the working region based on the three-dimensional map, thereby helping to ensure smooth, safe and efficient operation of the combined robot in a complex environment.

The technical solution of the present disclosure is described below in detail in combination with drawings and specific embodiments.

### BRIEF DESCRIPTION OF THE DRAWINGS

FIG. 1 is an example structural schematic diagram of a self-moving robot provided by an embodiment of the present disclosure;
FIG. 2 is a simplified flow chart of a three-dimensional map building method for a self-moving robot provided by an embodiment of the present disclosure;
FIG. 3 is an example structural schematic diagram of a combined robot provided by an embodiment of the present disclosure; and
FIG. 4 is an example schematic diagram of a walking state of a combined robot provided by an embodiment of the present disclosure on a working surface.

### DESCRIPTION OF EXAMPLE EMBODIMENTS

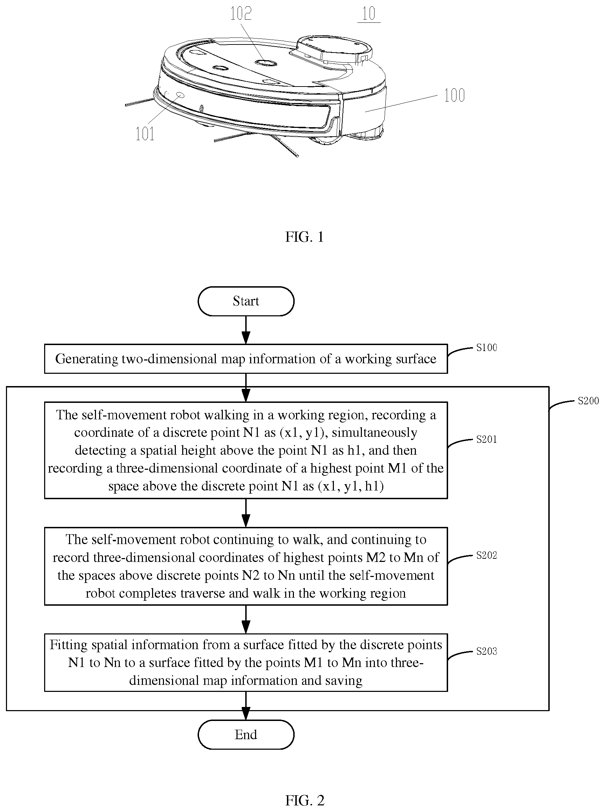

FIG. 1 is an example structural schematic diagram of a self-moving robot. As shown in FIG. 1, the self-moving robot 10 includes a robot body 100 and a control center (not shown in the figure) disposed on the body 100, wherein the robot body 100 includes a first distance sensor 101 disposed in a horizontal direction and a second distance sensor 102 disposed in a vertical direction. In these or other embodiments, the first distance sensor 101 collects two-dimensional map information of a working surface W in which the self-moving robot is located; and the second distance sensor 102 collects spatial height information above the working surface W in which the self-moving robot is located. Additionally or alternatively, while obtaining the two-dimensional map information of the working surface W, the control center combines the spatial height information with the two-dimensional map information to obtain three-dimensional map information of a working region. Additionally or alternatively, for a point A, two-dimensional map information is (x1, y1) and the spatial height information is h1, the combining, by the control center, the spatial height information with the two-dimensional map information to obtain three-dimensional map information of a working region may be a process of combining the (x1, y1) and h1 to obtain (x1, y1, h1) as three-dimensional map information. Additionally or alternatively, the first distance sensor 101 and the second distance sensor 102 include an ultrasonic sensor, an infrared sensor and/or a visual sensor. For example, the spatial height information above the working surface W is a distance between the working surface and a lower surface of an encountered obstacle in an up-down direction.

FIG. 2 is a simplified flow chart of a three-dimensional map building method for a self-moving robot. As shown in FIG. 2, a map building method for the self-moving robot provided in the embodiment as mentioned above includes the following example steps:
step 100: generating two-dimensional map information of a working surface; and
step 200: collecting spatial height information above the working surface in real time and combining the spatial height information with the two-dimensional map information of the working surface to obtain and save three-dimensional map information of a working region (in other words, obtain the three-dimensional map information of a working region and save the obtained three-dimensional map information of a working region).

Additionally or alternatively, the two-dimensional map information in the step 100 is obtained by the self-moving robot scanning the working surface during a traversing walk. Additionally or alternatively, the traversing walk is a operation or a process that the self-moving robot walks in the in a working region and walks all through the in the working region (in other words, traverses the in the working region). In these or other embodiments, the spatial height information above the working surface in the step 200 is a distance between the working surface and a lower surface of an encountered obstacle in an up-down direction.

An example process of combining the spatial height information with the pre-generated two-dimensional map information may include:
step 201: the self-moving robot walking in the working region, recording a coordinate of a discrete point N1 as (x1, y1), simultaneously (or approximately simultaneously) detecting a spatial height above the point N1 as h1, and then recording a three-dimensional coordinate of a highest point M1 of the space above the discrete point N1 as (x1, y1, h1);
step 202: the self-moving robot continuing to walk, and continuing to record three-dimensional coordinates of highest points M2 to Mn of the spaces above discrete points N2 to Nn until the self-moving robot completes a traversing walk in the working region;
and step 203: fitting spatial information between a surface fitted by the discrete points N1 to Nn and a surface fitted by the points M1 to Mn into three-dimensional map information and saving. In these or other embodiments, a three-dimensional map of the working region is built according to the three-dimensional map information saved in the step 203.

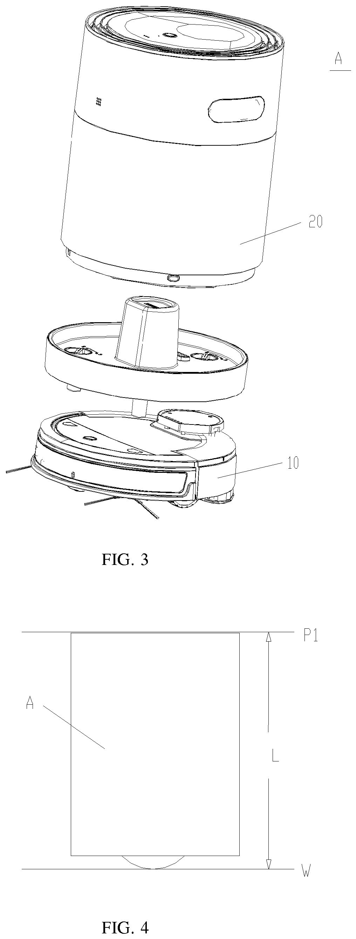

FIG. 3 is an example structural schematic diagram of a combined robot. As shown in FIG. 3, the combined robot A includes the above self-moving robot 10 and a functional module 20 integrated on the self-moving robot, wherein the self-moving robot includes, for example, a cleaning robot, a transporting robot or a walking robot capable of working individually. In one embodiment of the present disclosure, the self-moving robot 10 is a sweeping robot. Additionally or alternatively, the functional module 20 may be one submodule or a combination of more submodules of a security module, a humidifying module and a purifying module.

In these or other embodiments, the present disclosure includes a map invoking method for a combined robot. The combined robot A includes a self-moving robot 10 and a functional module 20 combined and connected with the self-moving robot. The self-moving robot 10 is provided with a storage unit (not shown in the figure), and the two-dimensional map information and the three-dimensional map information of the working region are stored in the storage unit. The combined robot A includes two working modes, such as an uncombined mode and a combined mode. When the self-moving robot 10 individually works, the combined robot is in the uncombined mode; and when the self-moving robot 10 is combined and connected with the functional module 20, the combined robot is in the combined mode. In the uncombined mode, the self-moving robot 10 invokes the two-dimensional map information and conducts a walking operation on a two-dimensional working surface W. Additionally or alternatively, for a wiping robot, conducting the walking operation may conduct wiping operation well walks in a working region. In the combined mode, the combined robot 10 invokes the three-dimensional map information and conducts a walking operation in a three-dimensional working region.

For example, in the combined mode, the combined robot A plans a walking path according to the three-dimensional map information and calculates a walkable working region. A method for planning the walking path may include: the combined robot calculating a plane map with a height L from the ground according to body height L and the three-dimensional map; and the combined robot planning the walking path according to the plane map.

FIG. 4 is a schematic diagram of a walking state of a combined robot of the present disclosure on a working surface. As shown in FIG. 4, for example, the combined robot calculates map information of a first plane P1 according to the body height L and the three-dimensional map information. In these or other embodiments, a height difference between the first plane P1 and the working surface W is the body height L of the combined robot. Additionally or alternatively, the combined robot plans the walking path according to the two-dimensional map information of the first plane P1.

As shown in FIG. 1 to FIG. 4, the actual working process of the embodiments of the present disclosure may be as follows:
As shown in FIG. 1, after the self-moving robot 10 walks and scans in the working environment to build a map or records the coordinate information of the working plane to build a map during a traversing walk, a two-dimensional map is formed in the control center of the self-moving robot 10. The formation process of the above two-dimensional map is well-known in the arts, and is not repeated herein. Additionally or alternatively, the self-moving robot 10 continues to conduct a traversing walk in the working environment. During walking, the distance sensors collect the height information in the working environment in real time (or approximately real time) and transmit the height information to the control center. The control center combines the height information with the pre-generated two-dimensional map to obtain a three-dimensional map and save the three-dimensional map into the control center.

In these or other embodiments, when the self-moving robot adopts the above mode of recording the coordinate information of the working plane to build the map during a traversing walk, the self-moving robot can simultaneously (or approximately simultaneously) record the spatial height information, e.g., when obtaining the two-dimensional information of the working plane, the self-moving robot can simultaneously (or approximately simultaneously) collect the three-dimensional information of the working region to complete the building of the three-dimensional map of the working region. When the combined robot, as shown in FIG. 3, is combined and connected, the height of the combined robot is higher than the height of the self-moving robot 10. Therefore, an original two-dimensional map may not be enough to be used as the basis for planning the walking path of the combined robot. For example, a position which could be smoothly passed previously by the self-moving robot 10 may become impassable due to the problem of the increased height of the combined robot. At this moment, the three-dimensional map may be invoked to plan the walking path of the combined robot.

As shown in FIG. 4, the body height of the self-moving robot 10 in the combined state is L. In the present embodiment, the combined robot calculates map information of the first plane P1 with a height L away from the working plane W of the self-moving robot through the above three-dimensional map. The first plane P1 can be regarded as the walkable working plane of the combined robot, and the walking path of the combined robot is planned in the map of the first plane P1.

Thus, in some embodiments, the present disclosure provides a self-moving robot, a map building method, and a map invoking method for a combined robot. In the present disclosure, through the distance sensors disposed on the self-moving robot, based on the generated two-dimensional map, the spatial height information is overlaid and the three-dimensional map information is generated; and in the combined state, the robot invokes and plans the walking path in the working region based on the three-dimensional map, thereby helping to ensure smooth, safe and efficient operation of the combined robot in a complex environment.

## Claims

1. A map invoking method, conducted by a combined robot (A), including a self-moving robot (10) combined to a functional module, wherein, in an uncombined mode, the self-moving robot (10) works without the functional module, and in the uncombined mode, the self-moving robot generates two-dimensional map information of a working surface by scanning the working surface during a traversing walk and three-dimensional map information by collecting spatial height information above the working surface and by overlaying said spatial height information to the two-dimensional map information;
the method comprising:
invoking three-dimensional map information;
calculating a plane map with a height L from the ground according to a body height (L) of the combined robot (A) and three-dimensional map information;
planning a walking path according to the plane map; and
conducting a walking operation along the walking path;
wherein the combined robot (A) further includes the functional module combined and connected on top of the self-moving robot (10); and
a storage unit configured to store two-dimensional map information and the three-dimensional map information of a working region.

2. The map invoking method of claim 1, wherein when the self-moving robot (10) of the combined robot (A) is combined and connected with a functional module, the combined robot (A) plans a walking path according to the three-dimensional map information and calculates a walkable working region.

3. The map invoking method of claim 1, wherein:
the combined robot (A) calculates map information of a first plane (P1) according to body height (L) of the combined robot (A) and the three-dimensional map information;
the combined robot (A) plans the walking path according to the two-dimensional map information of the first plane (P1); and
a height difference between the first plane and the working surface (W) is the body height of the combined robot (A).

## Patentansprüche

1. Verfahren zum Aufrufen eines Planes, das von einem kombinierten Roboter (A) durchgeführt wird, der einen selbst fahrenden Roboter (10) enthält, der mit einem Funktionsmodul kombiniert ist, wobei der selbstfahrende Roboter (10) in einem unkombinierten Modus ohne das Funktionsmodul arbeitet und in dem unkombinierten Modus zweidimensionale Planinformationen einer Arbeitsfläche durch Abtasten der Arbeitsfläche beim Durchlaufen und dreidimensionale Planinformationen durch Sammeln von Raumhöheninformationen über der Arbeitsfläche und durch Überlagern der Raumhöheninformationen mit den zweidimensionalen Planinformationen erzeugt;
Wobei das Verfahren umfasst:
Aufrufen dreidimensionaler Planinformationen;
Berechnen eines flachen Plans mit der Höhe L vom Boden gemäß der Körperhöhe (L) des kombinierten Roboters (A) und dreidimensionaler Planinformationen; Planen eines Gehwegs gemäß dem flachen Plan; und Durchführen eines Gehvorgangs entlang des Gehwegs; wobei der kombinierte Roboter (A) ferner das kombinierte Funktionsmodul, das oben auf dem sich selbst bewegenden Roboter (10) angeschlossen ist; und
eine Speichereinheit umfasst, die so konfiguriert ist, dass sie die zweidimensionalen Planinformationen und die dreidimensionalen Planinformationen eines Arbeitsbereichs speichert.

2. Verfahren zum Aufrufen eines Planes nach Anspruch 1, wobei, wenn der selbstfahrende Roboter (10) des kombinierten Roboters (A) kombiniert und mit einem Funktionsmodul verbunden ist, der kombinierte Roboter (A) einen Gehweg entsprechend den dreidimensionalen Planinformationen plant und einen begehbaren Arbeitsbereich errechnet.

3. Verfahren zum Aufrufen eines Planes nach Anspruch 1, wobei:
der kombinierte Roboter (A) die Planinformation der ersten Ebene (P1) gemäß der Körpergröße (L) des kombinierten Roboters (A) und der dreidimensionalen Planinformation berechnet;
der kombinierte Roboter (A) den Gehweg gemäß der zweidimensionalen Planinformation der ersten Ebene (P1) plant; und
ein Höhenunterschied zwischen der ersten Ebene und der Arbeitsfläche (W) die Körpergröße des kombinierten Roboters (A) ist.

## Revendications

1. Procédé d'appel de carte, réalisé par un robot combiné (A), comprenant un robot autonome (10) combiné à un module fonctionnel, dans lequel, en mode non combiné, le robot autonome (10) fonctionne sans le module fonctionnel, et dans ce mode non combiné, le robot autonome génère des informations cartographiques bidimensionnelles d'une surface de travail en balayant la surface de travail pendant une marche de déplacement et des informations cartographiques tridimensionnelles en collectant des informations de hauteur spatiale au-dessus de la surface de travail et en superposant lesdites informations de hauteur spatiale aux informations cartographiques bidimensionnelles;
le procédé comprenant :
l'appel d'informations cartographiques tridimensionnelles ;
le calcul d'une carte plane avec une hauteur L par rapport au sol en fonction d'une hauteur corporelle (L) du robot combiné (A) et des informations cartographiques tridimensionnelles ;
la planification d'un parcours de marche selon la carte plane ; et
la réalisation d'une opération de marche le long du parcours de marche ;
dans lequel le robot combiné (A) comprend en outre le module fonctionnel combiné et connecté en plus du robot autonome (10) ; et
une unité de stockage configurée pour stocker les informations cartographiques bidimensionnelles et les informations cartographiques tridimensionnelles d'une zone de travail.

2. Procédé d'appel de carte selon la revendication 1, dans lequel lorsque le Robot autonome (10) du robot combiné (A) est combiné et lié à un module fonctionnel, robot combiné (A) planifie un parcours de marche en fonction des informations cartographiques tridimensionnelles et calcule une zone de travail accessible à pied.

3. Procédé d'appel de carte selon la revendication 1, dans lequel
le robot combiné (A) calcule les informations cartographiques d'un premier plan (P1) en fonction de la hauteur corporelle (L) du robot combiné (A) et des informations cartographiques tridimensionnelles ;
le robot combiné (A) planifie le parcours de marche en fonction des informations cartographiques bidimensionnelles du premier plan (P1) ; et
la différence de hauteur entre le premier plan et la surface de travail (W) est la hauteur du corps du robot combiné (A).
